# EUROPÄISCHE PATENTANMELDUNG

(11) **EP 1 619 468 A1**
(43) Veröffentlichungstag der Anmeldung: **25.01.2006**
(21) Anmeldenummer: 04017253.8
(22) Anmeldetag: 22.07.2004
(51) Int. Cl.: G01C 1/02, G01C 15/00

(54) **Geodätisches Messgerät mit Piezo-Antrieb**

(71) Anmelder: Leica Geosystems AG, 9435 Heerbrugg (CH)
(72) Erfinder: Herbst, Christoph, 6850 Dornbirn (AT); Bernhard, Heinz, 9442 Berneck (CH); Häle, Anton, 9443 Widnau (CH)
(74) Vertreter: Kaminski, Susanne

(57) **Zusammenfassung**

In einem geodätischen Meßgerät (4) mit einer Halterung (8) zur Positionierung des Meßgeräts (4) und einer Messkomponente (7) mit einem optischen Strahlengang zur Vermessung eines Zieles, wobei die Messkomponente (7) in einer gegenüber der Halterung (8) bewegbaren Ausrichtkomponente (5) gelagert und gegenüber der Ausrichtkomponente (5) bewegbar ist, wird ein optischer Strahlgang durch wenigstens einen piezoelektrischen Mikromotor (1b,1c) modifiziert.

## Beschreibung

Die Erfindung betrifft ein geodätisches Messgerät nach dem Oberbegriff des Anspruchs 1.

In vielen geodätischen Messgeräten ist die Modifizierung eines optischen Strahlgangs, z. B. durch Ausrichtung von den Strahlgang integrierenden Komponenten oder eine Fokussierung auf ein Ziel, erforderlich. Dabei muss diese Modifizierung präzise und bei dynamischen Anwendungen auch hinreichend schnell erfolgen, so dass beispielsweise grosse zu bewegende Massen nachteilig sind. Zudem erfordert die Feldtauglichkeit des Messgerätes grundsätzlich Robustheit des Antriebs sowie einen geringen Stromverbrauch.

Beispiele für solche Messgeräte sind Theodoliten oder Tachymeter, welche - auch zusammen mit integrierten automatischen Zielerfassungs- und Zielverfolgungseinrichtungen - für vielfältige Vermessungsaufgaben zum Einsatz kommen, wobei sowohl eine Datengewinnung als auch eine reine Überprüfung, wie z.B. in der Bauwerksüberwachung, in Frage kommen. Andere Messgeräte sind beispielsweise Scannersysteme, die im abtastenden Verfahren Topographien von Oberflächen als dreidimensionale Punktwolken aufnehmen.

In bisherigen Lösungen kommen für diese Zwecke häufig Servomotoren zum Einsatz, die den Antrieb zum Schwenken oder Verschieben der Komponenten darstellen. Servomotoren mit einem nachgelagerten Getriebe weisen jedoch aufgrund dieser mechanischen Ausgestaltung ein Spiel auf, das zum einen eine hochgenaue Positionierung im Open-Loop-Verfahren verhindert, zum anderen aber das Getriebe oder auch Feststellelemente benötigt, um eine einmal erreichte Positionierung zu halten.

Durch die stetige Überprüfung der tatsächlich bewirkten Positionierung im Close-Loop-Verfahren sowie die notwendigen Fixierelemente gestalten sich auf Elektromotoren basierte Lösungen als komplex und mit einem hohen Platzbedarf versehen.

Kombinationen von Elektromotoren und Getrieben sind zudem nicht in der Lage hohe Achsgeschwindigkeiten mit genauer und langsamer Feinanzielung bzw. einer Positionierung zu verbinden, da in der Regel der nutzbare Drehzahlbereich der Motoren hierfür nicht gross genug ist.

Für minimale Verstellwege können hingegen alternative Antriebselemente, wie z.B. elektrostatische Kämme, verwendet werden. Aus der EP 1 314 960 ist ein geodätisches Messgerät bekannt, in dem Piezoelemente zur Bewegung einer Strahlungsquelle im Gehäuse des Messgeräts verwendet wird. Allerdings ist der verfügbare Bewegungsspielraum durch die Deformation des Piezoelementes beschränkt. Insbesondere eine fortlaufende und unbeschränkte Bewegung als Endlostrieb, wie sie z.B. für eine Rotation benötigt wird, ist durch einen Piezo-Aktuator bzw. ein Piezostellelement oder elektrostatische Vorrichtungen nicht realisierbar.

Eine Aufgabe der vorliegenden Erfindung besteht darin, ein geodätisches Messgerät bereitzustellen, das eine verringerte Zahl und/oder Komplexität seiner Antriebskomponenten bzw. eine verringerte Baugrösse aufweist.

Weitere Aufgaben bestehen darin, höhere Reaktionsgeschwindigkeiten für einzelne Komponenten wie auch das gesamte Gerät zu ermöglichen.

Eine weitere Aufgabe besteht darin, ein geodätisches Messgerät bereitzustellen, das eine direkte Positionierbarkeit bzw. eine verringerte Zahl von Bewegungen für eine Positionierung oder einen Anzielvorgang aufweist.

Eine weitere Aufgabe besteht darin, ein geodätisches Messgerät bereitzustellen, das eine vereinfachte oder verbesserte manuelle Ausrichtbarkeit aufweist.

Diese Aufgaben werden durch die Gegenstände des Anspruchs 1 oder der abhängigen Ansprüche gelöst bzw. die Lösungen weitergebildet.

Die Erfindung beruht darauf, das geodätische Gerät so auszubilden, dass eine Verwendung von piezoelektrischen Mikromotoren möglich ist.

Aus der WO 00/74153 ist ein piezoelektrischer Motor mit Mehrschichtaufbau bekannt. Durch eine Anordnung von Elektroden, zwischen denen ein piezoelektrisches Material eingebracht ist, werden Vibrationen angeregt, die zur Bewegung einem Kontaktelement, z.B. eines Keramikstiftes, und damit mittelbar eines zu bewegenden Körpers führen. Hierbei treibt der Keramikstift den Körper über eine Kontaktfläche, die als Lauffläche ausgebildet ist.

WO 98/53509 zeigt einen piezoelektrischen Mikromotor, der über eine piezoelektrische Platte mit Kanten und planaren Flächen direkt eine Welle antreibt. Die Oberfläche der Platte ist dabei so auf die Welle abgestimmt und ausgebildet, dass eine Kopplung erfolgt und die Bewegung der piezoelektrischen Platte auf die Welle übertragen wird und diese in Rotation versetzt. Dabei können auch mehrere Mikromotoren auf eine gemeinsame Welle wirken.

In der WO 00/25370 wird ein multidirektionaler Motor beschrieben, bei dem ein Wechsel der Drehrichtung eines Körpers durch eine Kippung des antreibenden piezoelektrischen Motors erfolgt.

EP 0 741 420 offenbart eine Vorrichtung zur Rotation eines Elementes mit gekrümmter Oberfläche um zwei orthogonale Achsen. Die Vorrichtung wird durch zwei Paare von piezoelektrischen Motoren angetrieben.

Durch einen piezoelektrischen Mikromotor erfolgt erfindungsgemäss ein Antrieb einer zu verstellenden, insbesondere zu drehenden oder linear zu verschiebenden Komponente des geodätischen Messgerätes. Diese Komponente modifiziert einen zur Messung verwendeten Strahlgang, z.B. durch eine Ausrichtung bzw. Änderung der Ausrichtung oder eine Fokussierung auf ein Ziel. Erfindungsgemäss können die Komponenten Mittel zur Ausrichtung eines geodätischen Messgerätes, aber auch Elemente des Strahlgangs im Gerät sein, wie z.B. klappbare Spiegel oder Filterscheiben. Neben der Umsetzung einer Bewegung durch direkte Übertragung auf eine Welle erlaubt vor allem die Verwendung einer Kombination von Kontaktelement und Lauffläche eine Vielzahl von Bauformen und Ausgestaltungsmöglichkeiten.

Die lineare Bewegung erfolgt hierbei durch Interaktion von Kontaktelement und Lauffläche, wobei das unter Druck die die Lauffläche kontaktierende Kontaktelement ein Vorschub bewirkt wird. Durch diese Kupplung wird eine vorantreibende Kraft übertragen, die durch die spielfreie Bewegung eine direkte Positionierung erlaubt. Dabei sind die vortreibenden Kräfte und die Geschwindigkeit direkt per Software konfigurierbar. Im abgeschalteten Zustand wird das die Lauffläche tragende Element durch den Anpressdruck des Kontaktelementes fixiert, so dass eine zusätzliche Bremse oder Feststellelemente nicht benötigt werden. Dabei erlaubt die durch Kontaktelement und Lauffläche bewirkte Rutschkupplung dennoch ein Gleiten, wenn eine maximale Kraft überschritten wird, so dass Beschädigungen oder Positionsveränderungen des gesamten Gerätes vermieden werden. Beispielsweise wird das Verdrehen eines Stativs beim schnellen manuellen Ausrichten eines darauf gelagerten Messgerätes unterbunden.

Im Gegensatz zu getriebebasierten Lösungen des Stands der Technik erlaubt die Rutschkupplung, insbesondere in Verbindung mit der gesteuerten Variation des Anpressdrucks, eine manuelle Bewegung der Gerätekomponenten gegeneinander, so dass z.B. ein direktes händisches Ausrichten des Gerätes durch den Benutzer möglich ist. Die manuelle Ausrichtung erlaubt eine schnelle und bedienerfreundliche Grobausrichtung zu Beginn oder während eines Messvorhabens, wobei ein manueller Modus auch durch Verringerung des Anpressdrucks explizit unterstützt werden kann. Durch die Verwendung eines Encoders zur Bestimmung der Relativposition der Komponenten zueinander kann nach einer Verdrehung wieder eine präzise Positionierung durch den Motor erfolgen, ohne dass lange Positionierungsfahrten erforderlich sind.

Die gleitende Vorschubbewegung kann durch geeignete ausgestaltete Elemente oder Laufflächen in Dreh- oder Kippbewegungen umgesetzt werden.

Gegeneinander zu verdrehende Komponenten können bewegt werden, indem die Laufflächen gekrümmt ausgebildet werden. Wird der Mikromotor im Kreuzungspunkt von zwei Rotationsebenen angeordnet, so kann er, z.B. nach einer Drehung, zur Bewegung in beiden Rotationsebenen verwendet werden. Die Laufflächen können neben einer Rotationsebene auch mehrere Rotationsebenen aufweisen, z.B. durch eine Kugelfläche bzw. sphärische Ausformung.

Bei der Verwendung mehrerer Mikromotoren kann es vorteilhaft sein, diese in einer der Komponenten anzuordnen und die gegenüber dieser Komponente zu bewegenden Teile mit Laufflächen zu versehen. Hierdurch kann eine Kapselung der Mikromotoren und eine gemeinsame Stromversorgung bzw. Ansteuerung realisiert werden.

Auch können zur Erhöhung der Antriebskraft mehrere Mikromotoren hinter- bzw. übereinander geschaltet werden.

Der erfindungsgemässe Einsatz von piezoelektrischen Mikromotoren erlaubt die Verwendung als skalierbares Achs-Antriebssystem für Bewegung der Hauptkomponenten des Messgerätes, das je nach vorgesehener Hauptanwendung ausgelegt wird. Insbesondere kann eine Bewegung um die Steh- und/oder Kippachse des Messgerätes bewirkt werden.

Zudem kann durch den lautlosen Antrieb eine Verwendung auch in hinsichtlich der Schallemission kritischen Umgebungen, wie z.B. in Kirchen, erfolgen.

Piezoelektrische Mikromotoren ermöglichen fast beliebig langsame Geschwindigkeiten für eine Feinanzielung, so dass hochgenaue Positionierungen erreichbar sind. Durch die geringen bewegten Massen ist das Messgerät hochdynamisch auslegbar, so dass zugleich die für einen Abtast- bzw. Scanvorgang notwendigen hohen Geschwindigkeiten erreicht werden können. Ein erfindungsgemässes Messgerät ist somit auch als Zielverfolgungssystem, Lasertracker oder Scanner ausgestaltbar.

Durch den einfachen Aufbau von piezoelektrischen Mikromotoren und die erfindungsgemässe Auslegung eines geodätischen Messgerätes ist zudem ein wartungsfreier oder hinsichtlich der Wartung reduzierter Betrieb des Gerätes möglich.

Das erfindungsgemässe geodätische Messgerät wird nachfolgend anhand von in der Zeichnung schematisch dargestellten Ausführungsbeispielen rein beispielhaft näher beschrieben oder erläutert. Im einzelnen zeigen
- Fig.1: die schematische Darstellung eines Antriebs durch piezoelektrische Mikromotoren;
- Fig.2: die Darstellung eines Schaltbilds zur Ansteuerung eines piezoelektrischen Mikromotors in einem Messgerät;
- Fig.3a-b: die figürliche und die schematische Darstellung eines Theodoliten als erstes Ausführungsbeispiel eines erfindungsgemässen Messgerätes;
- Fig.4: die schematische Darstellung des ersten Ausführungsbeispiels eines erfindungsgemässen Messgerätes in Seitenansicht;
- Fig. 5: die schematische Darstellung eines Theodoliten als zweites Ausführungsbeispiel eines erfindungsgemässen Messgerätes;
- Fig.6: die schematische Darstellung eines Scanners als drittes Ausführungsbeispiel eines erfindungsgemässen Messgerätes;
- Fig.7a-c: die schematische Darstellung eines vierten Ausführungsbeispiels eines erfindungsgemässen Messgerätes;
- Fig.8a-b: die schematische Darstellung eines Antriebs von optischen Elementen durch piezoelektrische Mikromotoren und
- Fig.9: die schematische Darstellung eines fünften Ausführungsbeispiels eines erfindungsgemässen Messgerätes.

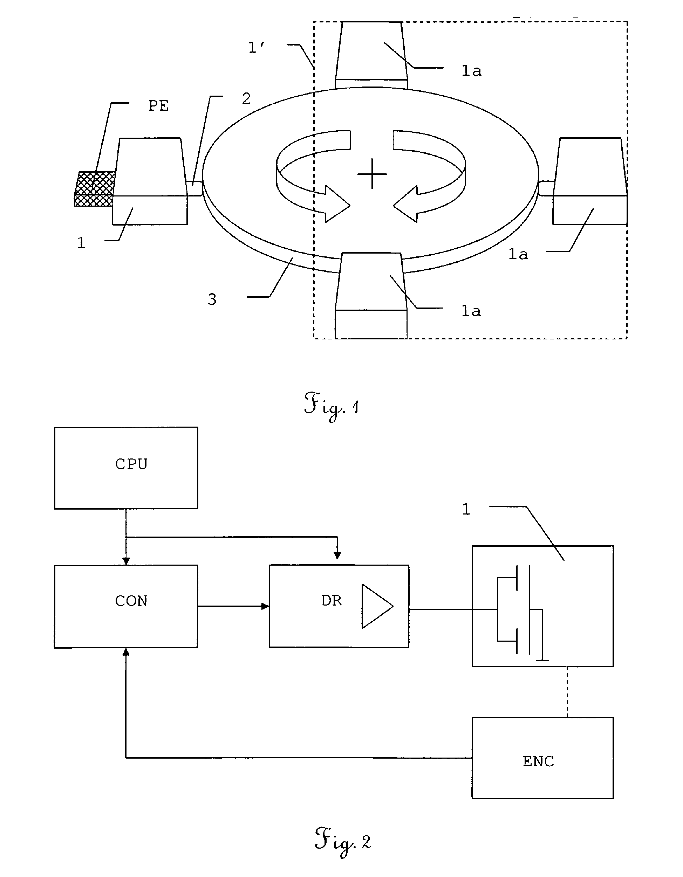

Fig.1 zeigt die schematische Darstellung eines Antriebs durch einen piezoelektrischen Mikromotor 1. Dieser weist wenigstens ein bewegungsübertragendes Kontaktelement 2 auf, wobei dem Kontaktelement 2 eine Lauffläche 3 zugeordnet ist. Ein Mikromotor 1*'* kann jedoch auch aus einer Mehrzahl von Teil-Mikromotoren 1a bestehen, die bezüglich einer zu bewegenden Komponente gleichwirkend angeordnet sind. In diesem Beispiel treiben drei Teil-Mikromotoren 1a als Endlostrieb ein scheibenförmiges Element mit einer kreisförmigen Keramikoberfläche als Lauffläche 3. Durch die Drehung eines solchen Elementes kann beispielsweise der optische Strahlgang einer Meßkomponente beweg- und feststellbar ausgebildet werden. Der durch die Mikromotoren 1 bewirkte Vortrieb ist softwareseitig frei konfigurierbar, wobei auch das direkte Anfahren einer Position realisiert bzw. verbessert werden kann, da durch ein Getriebespiel bedingte Ungenauigkeiten nicht kompensiert werden müssen. Der Andruck eines Mikromotors 1 bzw. dessen Kontaktelements 2 gegenüber der Lauffläche 3 kann durch eine weitere Komponente variierbar gestaltet werden, z.B. durch ein Piezoelement PE. Durch die gezielte Variation der Anpresskraft kann die manuelle Verstellbarkeit der einzelnen Komponenten erleichtert werden. Ein anderes Anwendungsgebiet ist die Erhöhung des Anpressdrucks bei stark asymmetrischen Masseverteilungen bzw. entsprechenden Trägheitsmomenten in ungünstigen Winkellagen. Die Variation der Anpresskraft erlaubt eine geringe Kraft im Normalbereich, wohingegen bei ungünstigen Stellungen die Kraft sukzessive erhöht werden kann. Hierdurch kann der ohnehin geringe Verschleiss zusätzlich verringert werden. Wie in diesem Ausführungsbeispiel dargestellt, können zur Erzielung höherer Vorschubkräfte wenigstens zwei piezoelektrische Mikromotoren 1a in ihrer Vorschubrichtung gleichwirkend, insbesondere kaskadenförmig oder gestapelt, angeordnet werden. Grundsätzlich können erfindungsgemässe Messgeräte aber auch mit nur einem einzigen piezoelektrischen Mikromotor 1 angetrieben bzw. bewegt werden.

Fig.2 die Darstellung eines Schaltbilds zur Ansteuerung eines piezoelektrischen Mikromotors in einem Messgerät. Von einem Prozessor CPU wird über einen Controller CON und einen Treiber DR ein piezoelektrischer Mikromotor 1 angesteuert, wobei eine direkte Steuerung des Treibers DR durch den Prozessor CPU die Linearität der Ansteuerung gewährleistet. Die von dem Mikromotor 1 bewegte Komponente wird hinsichtlich ihrer aktuellen Position von einem Encoder ENC, z.B. einem Winkelsensor, erfasst. Obwohl durch die lineare Skalierbarkeit des Vortriebs eine direkte Positionierung der Komponente grundsätzlich möglich ist, kann die Verwendung eines solchen Encoders ENC vorteilhaft sein, da durch die Rutschkupplung Verdrehungen erfolgen können, welche eine bestehende Korrelation zwischen abgespeicherter Soll- und tatsächlicher Ist-Position zerstören. Der Encoder ENC überprüft somit stets die tatsächliche Stellung der Komponente, wobei durch den spielfreien Vortrieb eine direkte Positionierung ohne die bei Lösungen des Stands der Technik erforderlichen zahlreichen Feinkorrekturen erfolgen kann.

Fig.3a-b zeigen die figürliche und die schematische Darstellung eines Theodoliten bzw. einer Totalstation als erstes Ausführungsbeispiel eines erfindungsgemässen Messgerätes.

In Fig.3a ist eine Totalstation als geodätisches Messgerät 4 mit einer Ausrichtkomponente 5 und einer Messkomponente 7 dargestellt. Die Messkomponente 7 weist ein Objektiv 6 auf, über das ein Strahlgang zu einem zu vermessenden Ziel definiert wird. Die Ausrichtkomponente kann gegenüber einer hier nicht dargestellten Halterung um eine vertikale Stehachse geschwenkt werden. Durch die Lagerung der Messkomponente 7 in der Ausrichtkomponente 5 kann die Messkomponente 7 um eine horizontale Kippachse bewegt werden. Die Bewegbarkeit um Steh- und Kippachse erlaubt das Erfassen eines grossen Raumwinkelbereichs, der bei einer Auslegung mit einer durchschlagbaren Messkomponente 7 eine vollständige Erfassung des umgebenden Raumes erlaubt.

Für das gleiche Messgerät 4 erfolgt in Fig.3b eine schematische und vereinfachte Darstellung. Die Messkomponente 7 mit dem Objektiv 6 ist über eine Achse 9 gegenüber der Ausrichtkomponente 5 drehbar gelagert. Die Achse 9 weist eine gekrümmte Lauffläche 3a auf, der ein Mikromotor als Messmotor 1b zugeordnet ist, wobei dieser Messmotor 1b die Lauffläche 3a radial kontaktiert und eine Drehung um die Kippachse bewirkt. Die aktuelle Position der Messkomponente 7 gegenüber der Ausrichtkomponente 5 wird durch einen Encoder ENC erfasst. Die Emission von Strahlung zur Vermessung des Ziels kann über das Objektiv 6 oder aber über einen zusätzlichen, zur optischen Achse des Objektivs parallelen Strahlgang erfolgen, der eine Laserstrahlung emittierende Entfernungsmesseinheit 10 und einen zugeordneten Spiegel 11 aufweist, so dass durch die Bewegung der Messkomponente 5 eine Abtastung der Umgebung erfolgen kann. Eine Drehung der Ausrichtkomponente 5 um die Stehachse erfolgt durch einen zweiten Mikromotor als Ausrichtmotor 1c, der eine in der Halterung 8 angeordnete ringförmige Lauffläche 3b axial kontaktiert. Durch diesen Ausrichtmotor 1c kann die Ausrichtkomponente 5 gegenüber der Halterung 8 verdreht werden, wobei die Anordnung als Endlostrieb wirkt. Auch dieser Achse ist im Regelfall ein - hier nicht dargestellter - Encoder zugeordnet, so dass die Orientierung der Komponenten bezüglich Steh- und Kippachse präzise erfasst und überprüft werden kann. Eine ruckartige Bewegung der Ausrichtkomponente 5 bewirkt eine Gleiten des Kontaktelementes des zweiten Mikromotors 1b gegenüber der Lauffläche 3b, so dass keine Positionsveränderung der Halterung 8 erfolgt. Die Anordnung entkoppelt somit Ausrichtkomponente 5 und Halterung 8 hinsichtlich beabsichtigter oder unerwünschter ruckartiger Bewegungen. Durch das Zusammenwirken von Messmotor 1b und Ausrichtmotor 1c ist der Strahlgang um zwei Achsen beweg- und ausrichtbar und somit modifizierbar. Durch die Anordnung aller Mikromotoren in einer einzigen Komponente kann eine baulich günstige Ansteuerung und Energieversorgung gewährleistet werden.

Fig.4 zeigt die schematische Darstellung des ersten Ausführungsbeispiels eines erfindungsgemässen Messgerätes 4 in Seitenansicht. Die Messkomponente 7 weist in diesem ersten Ausführungsbeispiel ein dem Objektiv 6 gegenüberliegendes Okular 13 auf, so dass ein direkter Einblick durch den Benutzer erfolgen kann. Gleichermassen können erfindungsgemässe Ausführungsformen aber auch mit anderen Aufnahme- bzw. Ausrichtsystemen, wie z.B. einem Kamerasystem, und auch ohne Okular 13 realisiert werden. Die Entfernungsmesseinheit 10 weist eine Laserquelle 14 auf, die über einen Strahlteiler 16 und den Spiegel 11 Laserstrahlung S auf das Ziel aussendet. Nach Reflexion am Ziel wird die Strahlung wieder empfangen und über den Spiegel 11 und den Strahlteiler 16 auf einen Sensor 15 geführt. Durch die Ausrichtung des Spiegels 11 wird die Laserstrahlung achsparallel zum über das Objektiv 6 geführten Strahlengang emittiert und wieder empfangen. Gleichermassen kann in einer weiteren erfindungsgemässen Ausführungsform jedoch die gesamte Entfernungsmesseinheit 10 auch in die Messkomponente 7 integriert werden, so dass die Laserstrahlung S auch über das Objektiv 6 koaxial emittiert und empfangen wird.

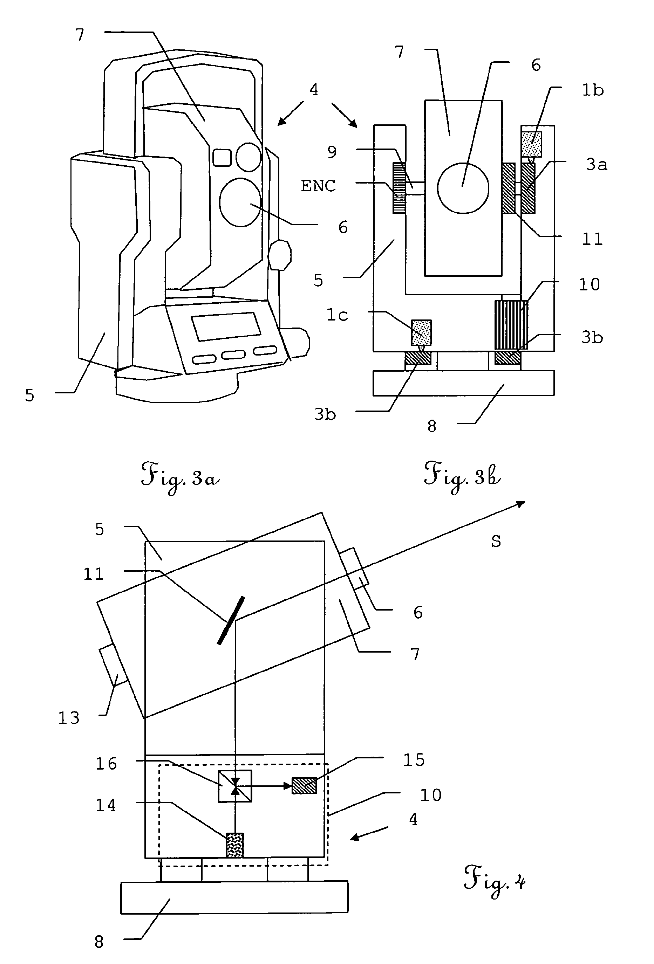

Ein zweites Ausführungsbeispiel eines erfindungsgemässen Messgerätes wird in Fig.5 schematisch dargestellt. Das Messgerät weist ebenfalls eine Messkomponente 7*'* mit Objektiv 6, einen an einer Achse 9 angebrachten Spiegel 11, eine Halterung 8 und eine Ausrichtkomponente 5*'* mit Encoder ENC und Entfernungsmesseinheit 10 auf, wobei die Messkomponente 7*'* vermittels der Achse 9 gegenüber der Ausrichtkomponente 5*'* verdrehbar gelagert ist. Die Ausrichtkomponente 5*'* ist wie im ersten Ausführungsbeispiel gegenüber der Halterung 8 durch einen Ausrichtmotor 1c und eine zugeordnete ringförmige Lauffläche 3b bewegbar. In diesem zweiten Ausführungsbeispiel ist jedoch die dem Messmotor 1b zugeordnete gekrümmte Lauffläche 3c nicht an der Achse 9 angebracht, sondern direkt an der Messkomponente 7*'* angeordnet. Die Lauffläche kann dabei einen Winkelbereich von 360° oder aber auch nur einen Kreisabschnitt abdecken. Durch diese Bauweise können beide Mikromotoren sehr nah beieinander angeordnet werden, so dass eine kompakte Versorgung möglich wird. Werden die gekrümmte Lauffläche 3c und die ringförmige Lauffläche 3b zumindest teilweise gegenüberliegend angeordnet, so kann ein einziger Mikromotor beide Laufflächen kontaktieren, wenn dieser schwenkbar angeordnet ist. Die Funktion von Messmotor 1b und Ausrichtmotor 1c werden dann in einem einzigen um 180° schwenkbaren Mikromotor vereint.

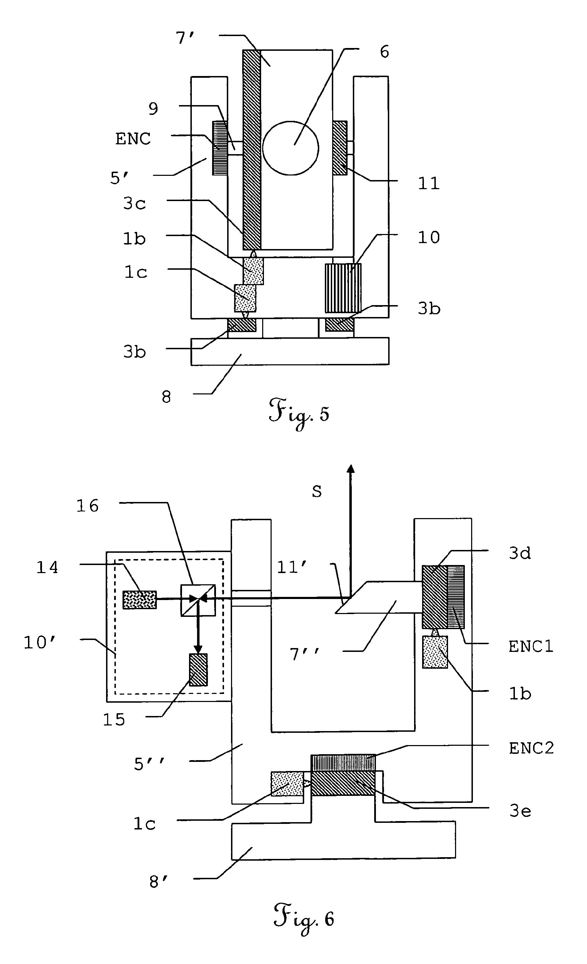

Fig.6 die schematische Darstellung eines Scanners als drittes Ausführungsbeispiel eines erfindungsgemässen Messgerätes. In einer Entfernungsmesseinheit 10*'* mit Laserquelle 14 und Strahlteiler 16 wird Laserstrahlung S erzeugt und auf eine mit einer geneigten Spiegelfläche 11*'* versehene Messkomponente 7*''* geführt. Die Spiegelfläche 11*'* bzw. die Messkomponente 7*''* ist durch die Kombination von Messmotor 1b und einer zugeordneten Lauffläche 3d gegenüber der Ausrichtkomponente 5*''* um eine horizontale Achse rotierbar, so dass grundsätzlich ein Winkel von 360° abgetastet werden kann. Die Emissionsrichtung bzw. die Lage der Spiegelfläche wird über einen ersten Encoder ENC1 erfasst. Über die gleiche Spiegelfläche 11*'* wird die von einem abzutastenden Ziel reflektierte Laserstrahlung wieder empfangen und über den Strahlteiler 16 auf den Sensor 15 geführt. Die Ausrichtkomponente 5*''* kann durch die Kombination von Ausrichtmotor 1c und einer zugeordneten gekrümmten Lauffläche 3d gegenüber der Halterung 8*'* um die Stehachse rotiert werden, so dass im Zusammenwirken der Bewegung von Messkomponente 7*''* und Ausrichtkomponente 5*''* eine vollständige, scannende Abtastung des Raumes erfolgen kann. Die Stellung der Ausrichtkomponente 5*''* bezüglich der Halterung 8*'* wird durch einen zweiten Encoder ENC2 erfasst. In diesem Ausführungsbeispiel sind beide Laufflächen 3d und 3e als radial kontaktierte Mantelflächen von Zylindern ausgebildet. Gleichermassen können jedoch auch andere Ausformungen und Kontaktierungen gewählt werden. So können beide Laufflächen auch als axial kontaktierte ringförmige Flächen ausgelegt werden.

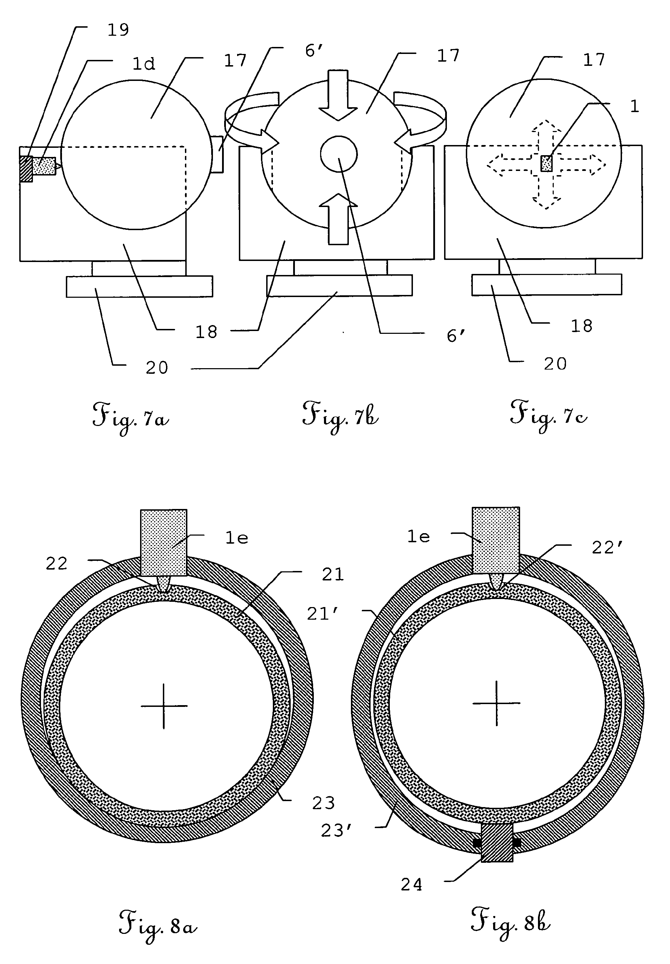

In Fig.7a-c erfolgt die schematische Darstellung eines vierten Ausführungsbeispiels eines erfindungsgemässen Messgerätes, wobei Fig.7a eine Seitenansicht, Fig.7b eine Vorderansicht und Fig.7c eine Rückansicht darstellt. In diesem Ausführungsbeispiel sind Meß- und Ausrichtkomponente in einen Rotationskörper 17 als gemeinsames, das Objektiv 6' aufweisendes Bauteil integriert, wobei dieses Bauteil um zwei Achsen bewegbar ist. Der Halterung 20 ist nun eine Aufnahme 18 für den Rotationskörper 17 zugeordnet, wobei Halterung 20 und Aufnahme 18 in ihrer Verbindung fix oder auch gegeneinander beweglich gelagert sein können. Der Rotationskörper 17 wird durch einen einzigen Mikromotor 1d bewegt, der durch ein Stellelement 19 um 90° verdrehbar bzw. hinsichtlich der Vorschubrichtung diskret oder kontinuierlich variierbar ist. Der Vorschub erfolgt nun durch Kontaktierung der Oberfläche des Rotationskörpers 17, der eine sphärisch gekrümmte Lauffläche aufweist. Diese Ausführungsvariante erlaubt eine gute Kapselung der optischen Komponenten in einem geschlossenen Bauteil. Wird der Mikromotor 1d in seiner Lage veränderbar und damit in Vorschubrichtung kontinuierlich verstellbar ausgelegt, so kann durch den Mikromotor 1d stets eine zur Vorschubrichtung tangentiale Motorausrichtung erfolgen, so dass ein optimaler Vorschub in der gewünschten Bewegungsrichtung erfolgt. Ein Beispiel für eine solche Veränderung der Motororientierung durch einen zweiten piezoelektrischen Motor wird in EP 1 127 380 beschrieben. Auf eine Aufteilung der Bewegung in zwei orthogonale Komponenten und deren Erzeugung durch zwei getrennte Motoren kann somit verzichtet werden.

Der Rotationskörper 17 muss nicht, wie in diesem Beispiel gezeigt, im wesentlichen kugelförmige Gestalt besitzen. Erfindungsgemäss können auch nur Teile einer Kugelfläche oder Flächen mit anders gestalteter Krümmung, z.B. mit variablem Krümmungsradius, verwendet werden.

Fig.8a-b erläutern den Antrieb von optischen Elementen durch piezoelektrische Mikromotoren in einer schematischen Darstellung. In Ergänzung oder alternativ zu den in den vorangehenden Figuren dargestellten Ausführungsbeispielen kann die Modifizierung des optischen Strahlgang auch durch eine Beeinflussung innerhalb der Mess- oder Ausrichtkomponente erfolgen.

Fig.8a zeigt ein optisches Element 21, z.B. eine Linse in einem Fokussierschlitten als Fokussierglied, das in einem Führungskörper 23, z.B. einem Fernrohrkörper, längsverschiebbar gelagert ist. Durch einen Mikromotor als Verstellmotor 1e wird das optische Element 21 gegen eine Fläche des Führungskörpers 23 gepresst und somit in der Lage fixiert. Der Anpressdruck des Verstellmotors 1e bewirkt somit eine Gleitlagerung in dem Führungskörper 23. Dabei muss die Reibung im Führungskörper 23 geringer sein als die Vorschubkraft des Verstellmotors 1e. Das Kontaktelement des Verstellmotors 1e kontaktiert das optische Element 21 in einer Rille 22 als Führungsnut, so dass eine Fixierung gegen eine Rotation des optischen Elements 21 bewirkt ist.

Systeme des Stands der Technik verwenden zur Fokussierung ein im Strahlgang verschiebbares Linsenelement, das über einen an der Linsenhalterung angebrachten Zapfen von einer Führungsbahn mitgenommen wird. Die Führungsbahn wird als Spirale innerhalb eines drehbar angeordneten Zylinders ausgeführt. Dabei wird das System so ausgelegt, dass der Rotationsmittelpunkt mit dem Mittelpunkt des Linsensystems zusammenfallen soll. Zur Vermeidung von Abweichungen der Mittelpunkte werden aufwendige Federsysteme verwendet, welche die notwendige Positionstreue gewährleisten. Zudem ist in einem Theodolit aufgrund des grossen nutzbaren Winkelbereichs in den Extremstellungen auch die Schwerkraft zu kompensieren. Der erfindungsgemäss Antrieb mittels piezoelektrischem Verstellmotor 1e erlaubt eine spielfreie Lagerung ohne toten Gang und ohne Hysterese, so dass eine schnelle und direkte Positionierung möglich ist. Zudem entfallen einige Komponenten der Lösungen des Stands der Technik, so dass das Messgerät kompakter und robuster gestaltet werden kann.

Die in Fig.8b dargestellte Lagerung beruht ebenfalls auf der Bewegung eines optischen Elementes 21*'* in einem Führungskörper 23*'* vermittels eines Verstellmotors 1e, allerdings erfolgt keine Gleitreibung sondern der Anpressdruck wird durch eine Gegenrolle 24 aufgenommen. Hierdurch kann die vom Antrieb bei einer Bewegung zu überwindende Reibung herabgesetzt werden. Jedoch kann es unter Umständen erforderlich sein, weitere Elemente zur Fixierung zu verwenden, wie z.B. weitere Gegenrollen oder Federn, um eine sichere Funktion in allen Winkelbereichen zu gewährleisten.

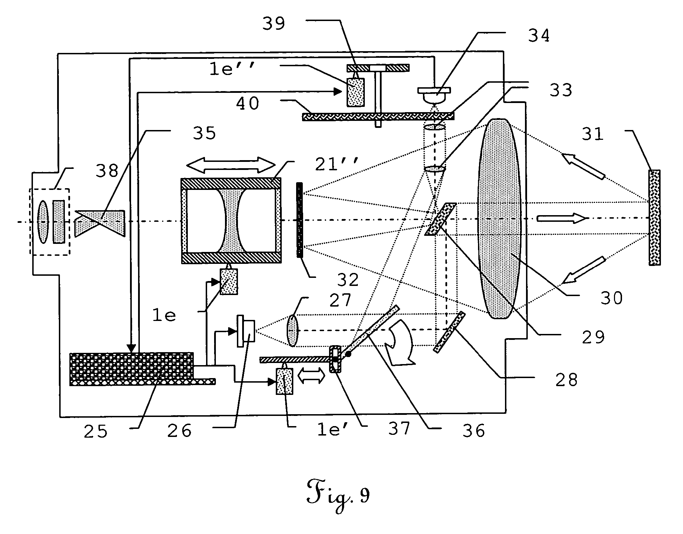

Fig.9 zeigt die schematische Darstellung eines fünften Ausführungsbeispiels des erfindungsgemässen Messgerätes. Hierbei erfolgt die Modifizierung des optischen Strahlgangs im Fernrohr eines Theodoliten als Beispiel für ein erfindungsgemässes geodätisches Messgerät. Von einer Strahlungsquelle 26, die zusammen mit einer Auswerteelektronik 25 auf einem gemeinsamen Trägerelement angeordnet ist, wird Licht über reflektierende Umlenkmittel 28 und 29 und ein Objektiv 30 auf ein Ziel 31 ausgesandt. Nach der Reflektion durch das Ziel 31 wird das Licht wieder vom Objektiv 30 erfasst und zur Signalverarbeitung über ein dichroitisches Spiegelelement 32 sowie das reflektierende Umlenkmittel 29 und ein Linsensystem 33 auf den Empfänger 34 geführt. Das Signal des Empfängers 34 wird durch die Auswerteelektronik 25 verarbeitet und eine Entfernungsinformation abgeleitet.

Im Strahlgang befindet sich eine Kalibrierklappe 36 als erstes optisches Element, durch das ein Teil des von der Strahlungsquelle 26 emittierten Lichtes direkt auf den Empfänger 34 geleitet wird, so dass eine geräteinterne Referenzstrecke realisiert entsteht. Um die Referenzmessung vom normalen Messvorgang zu trennen, ist die Kalibrierklappe 36 in den optischen Strahlgang bewegbar, so dass eine separate Messstrecke über die Kalibrierklappe 36 und das Linsensystem 33 auf den Empfänger 34 geführt wird. Die Bewegung der Kalibrierklappe 36 in den Strahlgang wird durch einen von der Auswerteelektronik 25 gesteuerten ersten piezoelektrischen Mikromotor als ersten Verstellmotor 1e*'* bewirkt, der eine mittels eines Gelenks mit der Kalibrierklappe 36 verbundene Schubstange 37 antreibt.

Neben den Mitteln zur Signalverarbeitung weist das Theodolitenfernrohr noch eine visuelle Optik auf, die das vom Ziel 31 zurückreflektierte Licht für den menschlichen Beobachter oder ggf. eine Kamera nutzbar macht. Hierfür werden ein Fokussierglied 21*''* als zweites optisches Element und ein Okularglied 38 verwendet, die wiederum verschiedene Komponenten, wie z.B. ein Umkehrprisma 35, aufweisen können. Das Fokussierglied 21*''* wird durch einen zweiten piezoelektrischen Mikromotor als zweiten Verstellmotor 1e in zur Fig.8a oder Fig.8b ähnlicher Weise bewegt. Ein das Fokussierglied 21*''* umfassender oder positionierender Führungskörper ist aus Anschaulichkeitsgründen nicht dargestellt. Der zweite Verstellmotor 1e wird ebenfalls durch die Auswerteelektronik 25 gesteuert.

Durch einen ebenfalls von der Auswerteelektronik 25 gesteuerten dritten piezoelektrischen Mikromotor als dritten Verstellmotor 1e*''* erfolgt die Bewegung eines Filterrades 40 als drittes optisches Element, wobei der dritte Verstellmotor 1e" eine ringförmige Lauffläche auf einem Antriebsrad 39 axial kontaktiert und somit das Filterrad 40 über eine Achse bewegt. Das Filterrad 40 kann beispielsweise verwendet werden, um im Nahbereich möglicherweise auftretende hohe Intensitäten auf dem Empfänger 34 zu reduzieren. Alle optischen Elemente können erfindungsgemäss auch einzeln oder in beliebiger Kombination in geodätischen Messgeräten realisiert werden, wobei auch zwei oder mehrere optische Elemente durch einen gemeinsamen Verstellmotor bewegt werden können.

Es versteht sich für den Fachmann, dass die verschiedenen Mittel zur Modifizierung des optischen Strahlgangs miteinander in alternativer oder ergänzender Weise kombiniert werden können. Auch können die Mikromotoren an anderen als den dargestellten Stellen des geodätischen Messgerätes angeordnet werden.

## Patentansprüche

1. Geodätisches Meßgerät (4), insbesondere Theodolit, mit wenigstens
• einer Halterung (8,8*'*) zur Positionierung des Meßgeräts (4),
• einer Messkomponente (7,7*'*,7*''*) zur Ausrichtung eines optischen Strahlgangs auf ein Ziel (31),
wobei die Messkomponente (7,7*'*,7*''*) in einer gegenüber der Halterung (8,8') bewegbaren, insbesondere um eine Stehachse drehbaren, Ausrichtkomponente (5,5*'*,5*''*) gelagert und gegenüber der Ausrichtkomponente (5,5',5") bewegbar ist, insbesondere um eine Kippachse drehbar,
**dadurch gekennzeichnet, dass**
der optische Strahlgang durch wenigstens einen piezoelektrischen Mikromotor (1,1*'*,1a-e,1e*'*,1e*''*) modifizierbar ist.

2. Geodätisches Meßgerät (4) nach Anspruch 1,
**dadurch gekennzeichnet, dass**
der Mikromotor (1,1*'*,1a-e,1e*'*,1e*''*) so durch einen Rechner im geodätischen Messgerät (4) ansteuerbar ist, dass die Vortriebskräfte des Mikromotors (1,1' ,1a-e,1e*'*,1e*''*) frei konfigurierbar sind.

3. Geodätisches Meßgerät (4) nach Anspruch 1 oder 2,
**dadurch gekennzeichnet, dass**
der Mikromotor (1,1*'*,1a-e,1e*'*,1e*''*) wenigstens ein bewegungsübertragendes Kontaktelement (2) aufweist, dem wenigstens eine Lauffläche (3,3a-e), insbesondere mit einer Keramikoberfläche, zugeordnet ist.

4. Geodätisches Meßgerät (4) nach Anspruch 3,
**dadurch gekennzeichnet, dass**
Kontaktelement (2) und Lauffläche (3,3a-e) eine Rutschkupplung bilden, wobei Kontaktelement (2) und Lauffläche (3,3a-e) manuell gegeneinander bewegbar sind.

5. Geodätisches Meßgerät (4) nach einem der Ansprüche 3 oder 4,
**dadurch gekennzeichnet, dass**
ein Andruck des Kontaktelements (2) auf die Lauffläche (3,3a-e) variierbar ist, insbesondere durch ein Piezoelement (PE).

6. Geodätisches Meßgerät (4) nach einem der Ansprüche 3 bis 5,
**dadurch gekennzeichnet, dass**
die wenigstens eine Lauffläche (3,3a-e) an der Halterung (8,8*'*) und/oder Meßkomponente (7,7*'*,7*''*) angeordnet ist.

7. Geodätisches Meßgerät (4) nach einem der Ansprüche 3 bis 6,
**dadurch gekennzeichnet, dass**
Halterung (8,8') und Meßkomponente (7,7*'*,7*''*) jeweils eine gekrümmte Lauffläche oder ringförmige Lauffläche (3,3a-e) aufweisen.

8. Geodätisches Meßgerät (4) nach einem der vorangehenden Ansprüche,
**dadurch gekennzeichnet, dass**
zur Modifizierung des optischen Strahlgangs
- die Ausrichtkomponente (5,5*'*,5*''*) durch den Mikromotor als Ausrichtmotor (1c) und/oder
- die Meßkomponente (7,7*'*,7*''*) durch den Mikromotor als Messmotor oder einen weiteren piezoelektrischen Mikromotor als Messmotor (1b)
bewegbar ausgebildet sind.

9. Geodätisches Meßgerät (4) nach Anspruch 7 und 8,
**dadurch gekennzeichnet, dass**
- die Lauffläche (3b) der Halterung (8) durch das zugeordnete Kontaktelement des Ausrichtmotors (1c) axial und
- die Lauffläche (3a,3c,3e) der Messkomponente (7,7*'*,7*''*) durch das zugeordnete Kontaktelement des Messmotors (1b) radial kontaktiert sind.

10. Geodätisches Meßgerät (4) nach einem der Ansprüche 8 oder 9,
**dadurch gekennzeichnet, dass**
Messmotor (1b) und Ausrichtmotor (1c) in der Ausrichtkomponente (5,5*'*,*''*) angeordnet sind.

11. Geodätisches Meßgerät nach einem der vorangehenden Ansprüche,
**dadurch gekennzeichnet, dass**
Meßkomponente und Ausrichtkomponente als ein gemeinsames Bauteil (17) ausgestaltet sind, wobei dieses Bauteil (17) um zwei Achsen bewegbar ist, insbesondere vermittels einer sphärisch gekrümmten Lauffläche.

12. Geodätisches Meßgerät (4) nach einem der vorangehenden Ansprüche,
**dadurch gekennzeichnet, dass**
dem optische Strahlgang wenigstens ein optisches Element (21,21') zugeordnet ist, welches durch den Mikromotor oder gegebenenfalls einen weiteren piezoelektrischen Mikromotor als Verstellmotor (1e,1e*'*,1e*''*) bewegbar ist, insbesondere in den Strahlgang verschiebbar oder klappbar ist.

13. Geodätisches Meßgerät (4) nach Anspruch 12,
**dadurch gekennzeichnet, dass**
das optische Element (21,21*'*,21*''*) eine Linse aufweist und bezüglich eines Führungskörpers (23,23'), insbesondere längs verschiebbar, gelagert ist, wobei durch den Verstellmotor (1e) ein Andruck des optischen Elements (21,21*'*,21*''*) gegen den Führungskörper (23) und/oder eine oder mehrere Gegenrollen (24) bewirkt wird.

14. Geodätisches Meßgerät (4) nach Anspruch 12 oder 13,
**dadurch gekennzeichnet, dass**
das optische Element eine dem Verstellmotor (1e) zugeordnete nutförmige Lauffläche aufweist.

15. Geodätisches Meßgerät (4) nach Anspruch 12,
**dadurch gekennzeichnet, dass**
das optische Element eine Kalibrierklappe (36) ist, welche zum Umschalten auf eine Meßstrecke in den optischen Strahlgang bewegbar ist.

16. Geodätisches Meßgerät (4) nach Anspruch 12,
**dadurch gekennzeichnet, dass**
das optische Element ein optisches Filter ist, insbesondere ein Filterrad (40), welches in den optischen Strahlgang bewegbar ist.

17. Geodätisches Meßgerät (4) nach einem der vorangehenden Ansprüche,
**dadurch gekennzeichnet, dass**
der Mikromotor wenigstens zwei zugeordnete piezoelektrische Teil-Mikromotoren als Bestandteile aufweist, wobei die Teil-Mikromotoren in ihrer Vorschubrichtung gleichwirkend sind, insbesondere durch kaskadenförmige oder gestapelte Anordnung.
